# EUROPÄISCHE PATENTSCHRIFT

(11) **EP 1 963 753 B1**
(45) Veröffentlichungstag und Bekanntmachung des Hinweises auf die Patenterteilung: **08.06.2016**
(21) Anmeldenummer: 06829589.8
(22) Anmeldetag: 14.12.2006
(51) Int. Cl.: F24H 9/18, F24H 3/04, B60H 1/22

(54) **ELEKTRISCHE HEIZVORRICHTUNG, INSBESONDERE FÜR AUTOMOBILE**
ELECTRICAL HEATING APPARATUS, IN PARTICULAR FOR AUTOMOBILES
SYSTEME DE CHAUFFAGE ELECTRIQUE, NOTAMMENT POUR AUTOMOBILES

(30) Priorität: 20.12.2005 DE 102005061303; 20.04.2006 DE 102006018784; 22.11.2006 DE 102006055865
(43) Veröffentlichungstag der Anmeldung: 03.09.2008
(73) Patentinhaber: BorgWarner Ludwigsburg GmbH, 71636 Ludwigsburg (DE); Eichenauer Heizelemente GmbH & Co. KG, 76870 Kandel (DE)
(72) Erfinder: LUPPOLD, Michael, 76706 Dettenheim-Lie. (DE); DAUTH, Alexander, 75433 Maulbronn (DE); ETZKORN, Hans-Peter, 76646 Bruchsal (DE); MERTE, Rolf, 69168 Wiesloch (DE); BARTMANN, Frank, 76707 Hambrücken (DE); BROSIG, Stefan, 67489 Kirrweiler (DE); ERNST, Norbert, 76831 Billigheim-Ingenheim (DE); DICK, Stephan, 66879 Niederstaufenbach (DE); DÖRRIE, Christian, 76863 Herxheim (DE)
(74) Vertreter: Twelmeier, Ulrich
(86) Internationale Anmeldenummer: PCT/EP2006/012026
(87) Internationale Veröffentlichungsnummer: WO 2007/071335

(56) Entgegenhaltungen:
- EP-A- 1 564 503
- EP-A- 1 731 852
- EP-A1- 0 464 955
- EP-A2- 1 370 117
- DE-A1- 10 102 671
- DE-U1- 20 108 843
- US-B1- 6 180 930

## Beschreibung

Die Erfindung geht von einer elektrischen Heizvorrichtung mit den im Oberbegriff des Anspruchs 1 angegebenen Merkmalen aus. Eine solche Heizeinrichtung ist aus der DE 101 02 671 A1 bekannt. Die bekannte Heizeinrichtung hat mehrere zueinander parallele Heizstäbe, welche mit PTC-Heizelementen gefüllt sind. Auf die Heizstäbe sind als Wärmeübertrager zahlreiche lamellenförmige Bleche klemmend aufgeschoben, welche die Heizstäbe zugleich miteinander verbinden. Aus einem Ende der Heizstäbe führt eine elektrische Anschlußleitung heraus, welche mit den PTC-Heizelementen verbunden ist. Das Gehäuse des jeweiligen Heizstabes dient als elektrischer Masseanschluß der PTC-Elemente

Die bekannte Heizvorrichtung hat mehrere Nachteile: Die Herstellung der Heizvorrichtung erfordert viele einzelne Schritte. Die Heizstäbe werden mit den PTC-Elementen bestückt und dann verpreßt, um eine gute wärmeleitende Verbindung zwischen den PTC-Elementen und dem Gehäuse der Heizstäbe herzustellen. Die Lamellen werden aus Blech gestanzt und einzeln auf die Heizstäbe geschoben. Die mechanische und wärmeleitende Verbindung der Lamellen mit den Heizstäben erfolgt durch Klemmung. Deshalb ist der Wärmefluß von den Heizstäben auf die Lamellen durch die geringe Größe der Berührungspunkte zwischen den Lamellen und dem Gehäuse der Heizstäbe begrenzt. Das Medium, auf welches die von den PTC-Heizelementen erzeugte Wärme übertragen werden soll, ist in dem in der DE 101 02 671 A1 offenbarten Fall Luft, welche zur Heizung des Innenraums eines Automobils dient. Die Luft durchströmt die Heizvorrichtung quer zu den Heizstäben und tangential zu den Lamellen. Die Wärmeübertragung ist bei der bekannten Heizvorrichtung nicht besonders wirkungsvoll. Um dennoch die gewünschte Wärmeleistung übertragen zu können, sind viele Lamellen in dichter Folge auf den Heizstäben angeordnet, was die Herstellung aufwendig macht.

Aus der EP 1 370 117 A2 ist eine elektrische Heizvorrichtung mit PTC-Heizelementen für die Beheizung des Innenraums von Automobilen bekannt, bei welcher der Wärmeübertrager nicht aus einer Vielzahl von einzelnen Lamellen gebildet ist, sondern aus Strangpressprofilabschnitten, welche durch Querteilen eines viele Kammern aufweisenden Strangpressprofils gebildet sind, wobei die vielen Kammern durch dünne Wände voneinander getrennt sind. Mehrere untereinander gleiche Strangpressprofilabschnitte sind rechtwinklig zur Strangpressrichtung nebeneinander angeordnet. Die PTC-Heizelemente liegen zwischen je zwei nebeneinander liegenden Strangpressprofilabschnitten und werden dadurch fixiert, dass die Strangpressprofilabschnitte in einem gemeinsamen Rahmen miteinander zu einer Baugruppe verspannt sind. Die Luft, auf welche die von den PTC-Heizelementen erzeugte Wärme übertragen werden soll, durchströmt die Strangpressprofilabschnitte in der Strangpressrichtung, tangential zu den Oberflächen der in den Strangpressprofilabschnitten gebildeten vielen Kammern. Zwar ist der aus der EP 1 370 117 A2 bekannten Heizvorrichtung der Montageaufwand für den Wärmeübertrager geringer als im Falle der DE 101 02 671 A1, die Wirksamkeit der Wärmeübertragung ist aber nicht besser als im Falle der DE 101 02 671 A1. Außerdem sind die PTC-Heizelemente, ihre Zuleitungen und ihre elektrischen Kontaktstellen dem Einfluß der Luft, auf welche ihre Wärme übertragen werden soll, ausgesetzt, was Korrosion und erhöhte Übergangswiderstände nach sich zieht.

Aus der EP 1 731 852 A1 ist eine elektrische Heizvorrichtung mit PTC-Elementen für die Beheizung des Innenraums von Automobilen bekannt. Bei dieser Heizeinrichtung sind die PTC-Elemente zwischen Strangpressprofilen angeordnet, die jeweils auf ihrer von den Heizelementen abgewandten Kühlrippen aufweisen. Die Luft, auf welche die von den PTC Heizelementen erzeugte Wärme übertragen werden soll, durchströmt die Strangpressprofile in der Strangpressrichtung tangential zu den Oberflächen der Kühlrippen. Ebenso wie bei der aus EP 1 370 117 A2 bekannten Heizvorrichtung sind die PTC Heizelemente und ihre Zuleitungen dem Einfluss der Luft, auf welche ihre Wärme übertragen werden soll, ausgesetzt.

Aus der DE 201 08 843 U1 ist eine Heizvorrichtung zum Beheizen oder Warmhalten von Speisen oder Getränken bekannt, insbesondere eine Warmhalteplatte einer Kaffeemaschine, welche eine Platte aufweist, in welche zwei Hohlkammern zum Aufnehmen von PTC-Elementen integriert sind. Diese Platte mit den integrierten Hohlkammern ist als Strangpressprofil ausgebildet.

Der vorliegenden Erfindung liegt die Aufgabe zugrunde, bei einer elektrischen Heizvorrichtung der eingangs genannten Art den Aufwand für das Herstellen und die Wärmeübertragung zu verbessern.

Diese Aufgabe wird durch eine Heizvorrichtung mit den im Patentanspruch 1 angegebenen Merkmalen gelöst. Vorteilhafte Weiterbildungen der Erfindung sind Gegenstand der Unteransprüche.

Bei der erfindungsgemäßen Heizvorrichtung sind als Wärmeübertrager ein oder mehrere Strangpressprofile vorgesehen, in welche die eine oder mehrere Heizeinrichtungen eingefügt sind. Wenigstens ein Teil der Wände des oder der Strangpressprofile, welche nicht an einem Heizelement liegen, weist Öffnungen auf, durch welche das Strangpressprofil von einem gasförmigen oder flüssigen Medium quer, vorzugsweise im rechten Winkel, zur Strangpressrichtung durchströmt werden kann. Das hat Vorteile:
Um eine hohe Wärmeabgabe zu ermöglichen, ist es nicht nur günstig, wenn der Wärmeübertrager eine verhältnismäßig große Oberfläche als Wärmetauscherfläche hat, sondern es ist besonders vorteilhaft, wenn die Oberfläche des Strangpressprofils jedenfalls dort, wo dessen Wände nicht an einem Heizelement liegen, Öffnungen aufweist, so dass das Strangpressprofil von dem Medium, auf welches die Wärme übertragen werden soll, quer zur Strangpressrichtung durchströmt werden kann. Dadurch kann in vorteilhafter Weise eine starke Wirbelbildung erzwungen werden, und zwar insbesondere dann, wenn die Wände des Strangpressprofils Einschnitte haben und die durch die Einschnitte begrenzten Teile der Wände aus der jeweiligen Wand gebogen sind. Auf diese Weise lassen sich Blenden, Lamellen, Zungen, gitterartige Strukturen und dergleichen erzeugen, die für eine Wirbelbildung und damit für eine hohe Wärmeübertragung besonders günstig sind. Die von den Einschnitten begrenzten Teile der Wände werden vorzugsweise in das Strangpressprofil hinein gebogen, weil sie dort in keiner Weise stören. Das eingebogene Material stellt keinen Verschnitt dar und wird effektiv für den Wärmeaustausch genutzt.

Ausgeschnittene Löcher und einwärtsgebogene Teile der Wände lassen sich mit Vorteil auch miteinander kombinieren. Durch Wahl der Gestalt und Anordnung der Öffnungen und Einschnitte ist es möglich, den Druckverlust beim Anströmen in weiten Grenzen an den konkreten Anwendungsfall anzupassen.

Die Löcher, Einschnitte und die einwärts gebogenen Lamellen, Zungen, Blenden und dergleichen lassen sich in einem Arbeitsgang durch ein kombiniertes Stanz- und Biegewerkzeug erzeugen. In ein und demselben Arbeitsgang kann bei Verwendung eines Folgeverbundwerkzeuges auch das Strangpressprofil an den Stellen, wo sich die Heizeinrichtungen befinden, eingedrückt werden, um die Heizeinrichtungen mit dem Strangpressprofil zu verpressen und auf diese Weise nicht nur zu fixieren, sondern auch einen guten Wärmeübergang von den Heizelementen auf das Strangpressprofil zu sichern.

Ein weiterer Vorteil der Erfindung besteht darin, dass durch Wahl der Gestalt und der Höhe des Strangpressprofils, durch die lichte Weite von Kammern des Strangpressprofils, durch die Gestalt, die Größe und die Verteilung der Öffnungen des Strangpressprofils und durch die Form von einwärtsgebogenen Lamellen oder Zungen der Strömungswiderstand und der Wärmeübergang vom Strangpressprofil auf das ihn quer durchströmende Medium für den jeweiligen Einsatzzweck optimiert werden können. Ein in der Strangpressrichtung durchströmtes Strangpressprofil erlaubt eine derartige Optimierung nicht.

Das Strangpressprofil kann nicht nur die Funktion des Wärmeübertragers, sondern zugleich die Funktion des Gehäuses der wenigstens einen Heizeinrichtung übernehmen. Zu diesem Zweck ist in dem Strangpressprofil vorzugsweise für jede Heizeinrichtung eine eigene Hohlkammer vorgesehen, welche im Schnitt quer zur Strangpressrichtung geschlossen ist und ein Heizelement oder eine Anordnung von mehreren Heizelementen aufnimmt. Die Enden dieser Hohlkammem lassen sich hermetisch verschließen, z. B. mittels eines hinreichend wärmebeständigen Kunststoffes, vorzugsweise mittels eines wärmehärtbaren Zweikomponentenkunststoffes, so dass die Heizelemente und ihre elektrischen Kontaktstellen dem Medium, auf welches sie die Wärme übertragen sollen, nicht ausgesetzt sind. Erfindungsgemäße Heizvorrichtungen können deshalb auch in flüssigen Medien eingesetzt werden, z. B. zum Aufwärmen von Dieselkraftstoff. Als weiterer Vorteil kommt ein optimaler Wärmefluß vom Gehäuse der Heizeinrichtung auf den Wärmeübertrager hinzu, wenn das Gehäuse ein integraler Bestandteil des Wärmeübertragers ist.

Es ist aber auch möglich, stabförmige Heizeinrichtungen mit einem gesonderten Gehäuse vorzufertigen und in eine Kammer des Strangpressprofils einzufügen, welche dicht sein kann, aber nicht dicht sein muss.

Eine gute wärmeleitende Verbindung zwischen den Heizelementen und dem Strangpressprofil kann man ohne großen Aufwand dadurch erzielen, dass man die Heizeinrichtungen bzw. die Heizelemente mit dem Strangpressprofil verpresst.

Die erfindungsgemäße Heizvorrichtung ist mechanisch außerordentlich stabil, ohne dass es eines Rahmens bedürfte, um Heizeinrichtungen und Sammelübertrager zusammenzuhalten.

Durch die Erfindung läßt sich die Zahl der Einzelteile für die Herstellung der Heizvorrichtung drastisch vermindern. Der wenigstens eine Wärmeübertrager, welcher aus einem Strangpressprofil gebildet ist, erstreckt sich vorzugsweise über die Länge der Heizeinrichtungen, soweit diese mit Heizelementen belegt sind. Auf eine Heizeinrichtung müssen deshalb nicht wie im Stand der Technik viele Lamellen aufgeschoben werden, sondern nur ein einziger Wärmeübertrager. Besonders vorteilhaft ist es, für die Gesamtheit der Heizeinrichtungen nur einen einzigen Wärmeübertrager vorzusehen. Das verringert die Lagerhaltung von Bestandteilen der Heizvorrichtung auf ein Minimum. Außerdem erhält die Heizvorrichtung eine hohe mechanische Stabilität. Zugleich werden die Maßtoleranzen minimiert, da die Maße überwiegend durch das Strangpressprofil bestimmt werden und dessen Maßabweichungen fertigungsbedingt gering sind. Die Unterschiede zwischen Heizvorrichtungen einer Serie fallen erfindungsgemäß drastisch kleiner aus als bei Heizvorrichtungen gemäß dem Stand der Technik. Die dadurch verbesserte Qualität führt gleichzeitig zu einer Verringerung des Aufwandes zur Überwachung der Qualität.

Durch die Verringerung der Anzahl der Einzelteile der Heizvorrichtung verringern sich nicht nur die Montagezeiten, sondern auch die Kosten für die Werkzeuge, die für die Fertigung benötigt werden, und damit zusammenhängend auch die Kosten der Rüstzeiten für die Werkzeuge.

Da Strangpressprofile in unterschiedlichsten Querschnittsformen und Querschnittsgrößen hergestellt werden können, kann die äußere Gestalt der erfindungsgemäßen Heizvorrichtung flexibel an den jeweiligen Anwendungsfall angepaßt werden.

Durch die Verwendung eines Strangpressprofils als Wärmeübertrager ist es einfacher geworden, die gesamte Oberfläche der Heizvorrichtung einheitlich auf Massepotential zu legen.

Die Erfindung eignet sich für Heizvorrichtungen mit beliebiger Anzahl von Heizeinrichtungen.

Ist das Gehäuse der Heizeinrichtung integraler Bestandteil des aus einem Strangpressprofil gebildeten Wärmeübertragers, dann ermöglicht das eine höhere Leistungsabgabe bzw. erlaubt es bei vorgegebener Leistungsabgabe die Verwendung von weniger Material zur Herstellung des Wärmeübertragers.

Wenn der Wärmeübertrager nicht zugleich die Funktion eines Gehäuses für die wenigstens eine Heizeinrichtung übernimmt, sondern die Heizeinrichtung ein gesondertes Gehäuse hat, dann muss dieses nicht in eine rundum, d. h. im Schnitt quer zur Strangpressrichtung geschlossene Hohlkammer des Wärmeübertragers eingefügt sein, sondern kann z. B. zwischen innenliegenden Rippen des Strangpressprofils eingefügt sein. Bevorzugt ist jedoch die Verwendung des Wärmeübertragers zugleich als Gehäuse für die wenigstens eine Heizeinrichtung, so dass ein gesondertes Gehäuse für die Heizeinrichtung entbehrlich ist, wobei der Vorteil erhalten bleibt, dass die Heizeinrichtung hermetisch abgeschlossen untergebracht werden kann.

Vorzugsweise ist die Heizeinrichtung eine langgestreckte Baugruppe, welche mehrere Heizelemente in geradliniger Anordnung hintereinander enthält, wie es aus dem Stand der Technik an sich bekannt ist. Die Heizelemente können durch eine gemeinsame Leiterbahn, welche sich in Längsrichtung der Hohlkammer des Strangpressprofils erstreckt und die Heizelemente kontaktiert, mit Strom versorgt werden. Geschlossen wird der Stromkreis bevorzugt über das Strangpressprofil, welches auf Masse liegt. Die für die Stromzuführung verwendete Leiterbahn ist gegenüber dem Strangpressprofil zu isolieren. Das kann durch einen sich über die Länge des Strangpressprofils erstreckenden Streifen eines elektrisch isolierenden Materials geschehen oder dadurch, dass die Leiterbahn mit Ausnahme der Auflageflächen für die PTC-Heizelemente mit einem isolierenden Werkstoff umspritzt wird. Vorzugsweise geschieht es dadurch, dass als Heizelemente PTC-Widerstände verwendet werden, welche paarweise nebeneinanderliegend angeordnet sind. In diesem Fall kann die Leiterbahn zwischen den PTC-Heizelementen eines jeden Paares verlaufen, die er beide kontaktiert, und ist durch die PTC-Heizelemente von dem Strangpressprofil getrennt.

In einer vorteilhaften Weiterbildung der Heizvorrichtung hat das Strangpressprofil neben den Hohlkammern für die Heizeinrichtung weitere Kammern, welche parallel zu den Hohlkammern verlaufen. Auf diese Weise erhält die Heizvorrichtung eine hohe mechanische Stabilität.

In einer anderen bevorzugten Weiterbildung der Heizvorrichtung sind die Hohlkammern für die Heizeinrichtung mittelbar oder unmittelbar durch Stege verbunden, welche keine weiteren Kammern enthalten. Das vereinfacht den Aufbau der Heizvorrichtung und spart Material. Die Stege können unmittelbar von den Hohlkammern ausgehen, so dass diese ausschließlich durch Stege verbunden sind, welche keine weiteren Kammern enthalten. Am Übergang von den Hohlkammern für die Heizeinrichtung zu den Stegen kann aber auch jeweils eine weitere Kammer vorgesehen sein, die sich parallel zu den Hohlkammern für die Heizeinrichtung erstreckt. Das ermöglicht einen fließenden, für die Wärmeübertragung günstigen Übergang von den Wänden der Hohlkammern für die Heizeinrichtung zu den Stegen. Hinsichtlich des Wärmeübergangs von der Heizeinrichtung in den Hohlkammern zu den Stegen ist es weiterhin günstig, wenn diese im Querschnitt plankonkav oder bikonkav sind. In diesem Fall können sie dort, wo sie auf den Hohlkammern fußen, ungefähr so dick sein wie diese und sich dann mit zunehmender Entfernung von diesen verjüngen, was Material spart, ohne den Wärmefluss zu behindern. Vielmehr gelingt es durch eine solche Querschnittsform, auf den Stegen ein flaches Temperaturprofil zu erzeugen.

Vorzugsweise erstreckt sich das Strangpressprofil beidseits über die Hohlkammern für die Heizeinrichtung hinaus, entweder unter Ausbildung einer weiteren Hohlkammer oder lediglich unter Ausbildung einer massiven Wand, welche sich mit zunehmender Entfernung von der Hohlkammer für die Heizeinrichtung verjüngt. Eine solche sich verjüngende Wand kann mit Vorteil auch dafür verwendet werden, um die Heizvorrichtung in zwei im Querschnitt U-förmige Führungsschienen einzuführen, in welcher sie im Fahrzeug austauschbar gehalten werden kann.

Die größte Wandstärke hat das Strangpressprofil vorzugsweise dort, wo es die wenigstens eine Heizeinrichtung umschließt. Das ist günstig für die Aufnahme der von den Heizelementen erzeugten Wärme. Mit zunehmender Entfernung von der Heizeinrichtung wird die Wandstärke des Strangpressprofils vorzugsweise verringert, da die zu transportierende Wärme mit zunehmender Entfernung von der Heizeinrichtung abnimmt. Eine stetige Verringerung der Wandstärke mit zunehmender Entfernung von den Heizeinrichtungen ist bevorzugt.

Zur Vergrößerung der Wärmeaustauschfläche sind die Wände oder Stege, welche parallel zueinander verlaufende Hohlkammern oder Hohlkammerprofile miteinander verbinden, mit Stegen versehen, welche vorzugsweise senkrecht oder einigermaßen senkrecht auf den Wänden oder Stegen stehen. Vorzugsweise ragen diese Rippen nicht über die Ebenen, welche die nebeneinander liegenden Hohlkammern einschließen, hinaus. In einer besonders günstigen Ausführungsform nimmt die Höhe der Stege mit zunehmendem Abstand den Hohlkammern ab. Das trägt der Tatsache Rechnung, dass die Wärmemenge, welche quer durch den Wärmeübertrager fließt, mit dem Abstand von der Hohlkammer abnimmt. Alternativ oder ergänzend können die Oberflächen, die dem Wärmetausch dienen, aufgerauht sein.

Gemäß seiner Aufgabe, Wärme zu übertragen, eignet sich für das Strangpressprofil jedes gut wärmeleitfähige Material, vorzugsweise gut wärmeleitfähige Metalle wie Aluminium, Kupfer und Legierungen dieser Metalle, aber auch gut wärmeleitfähige keramische Werkstoffe.

Die Erfindung eignet sich besonders für elektrische Zuheizer in Fahrzeugen aller Art.

Ausführungsbeispiele der Erfindung sind in den beigefügten Zeichnungen dargestellt. Gleiche oder einander entsprechende Teile sind in den verschiedenen Beispielen mit übereinstimmenden Bezugszahlen bezeichnet.
- Fig. 1: zeigt eine Ansicht einer erfindungsgemäßen Heizvorrichtung,
- Fig. 2: zeigt eine Schrägansicht eines stranggepressten Hohlprofilabschnittes, welcher in Figur 1 als Wärmeübertrager vorgesehen ist.
- Fig. 2a: zeigt das Detail A aus Figur 2,
- Fig. 3: zeigt in einer Schrägansicht und in Explosionsdarstellung den Aufbau einer stabförmigen Heizeinrichtung,
- Fig. 4: zeigt einen Längsschnitt durch einen Teil einer Heizvorrichtung,
- Fig. 5: zeigt einen Längsschnitt entsprechend der Figur 4 durch eine abgewandelte Heizvorrichtung, die
- Fig. 6 bis 11: zeigen Abschnitte von unterschiedlich gestalteten Wärmetauscherflächen von Strangpressprofilen,
- Fig. 12: zeigt eine Schrägansicht einer Heizeinrichtung, bei welcher Hohlkammern, die Heizelemente aufnehmen, durch Wände verbunden sind, die keine weiteren Hohlkammern enthalten,
- Fig. 13: zeigt das Detail A aus Figur 12,

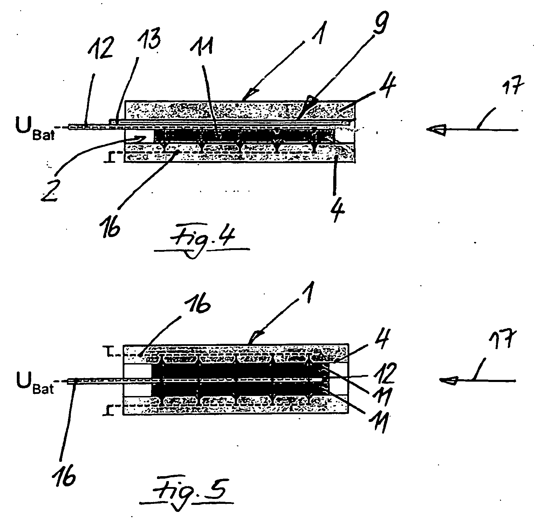

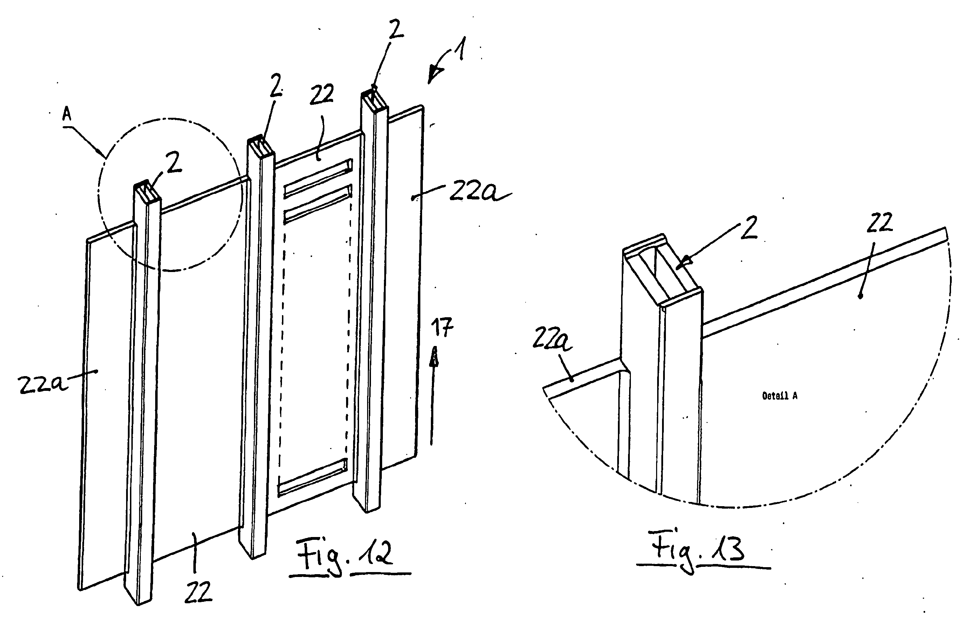

- Fig. 4: zeigt ein gegenüber der Heizvorrichtung in Figur 12 abgewandeltes Beispiel einer Heizeinrichtung in einer Schrägansicht,

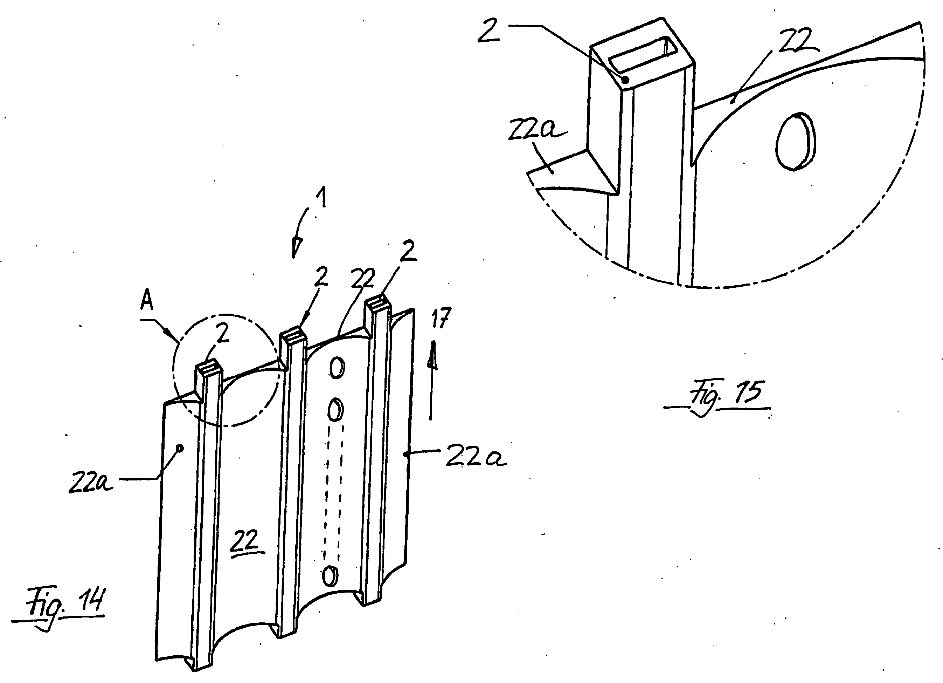

- Fig. 15: zeigt das Detail A aus Figur 14,

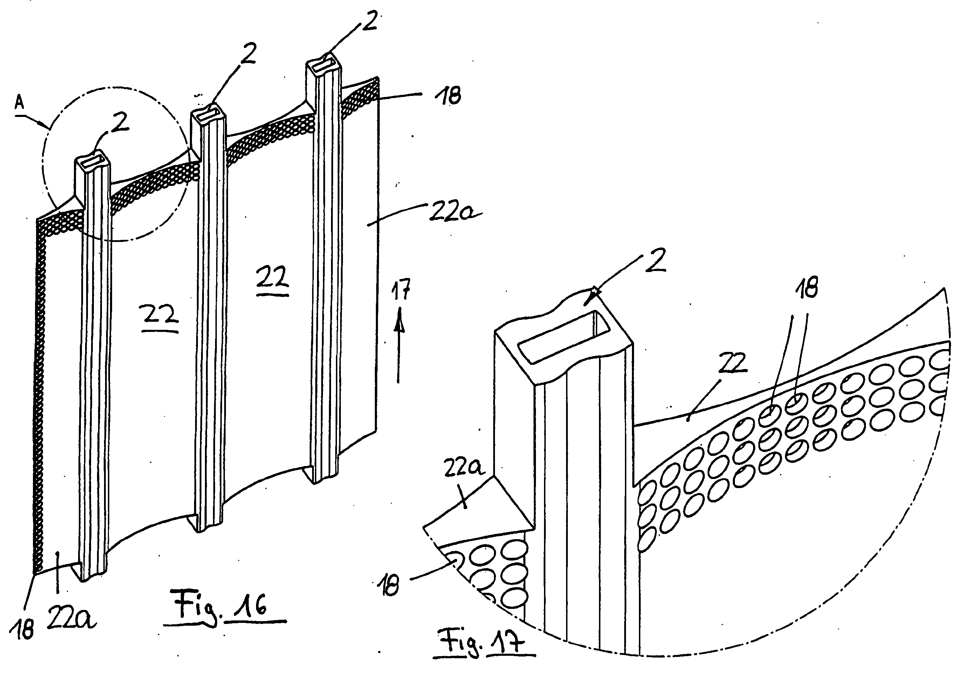

- Fig. 16: zeigt eine Heizeinrichtung in einer Schrägansicht, welche der in Figur 14 dargestellten Heizeinrichtung ähnelt und gegenüber dieser abgewandelt ist,
- Fig. 17: zeigt das Detail A der Heizeinrichtung gemäß Figur 16,

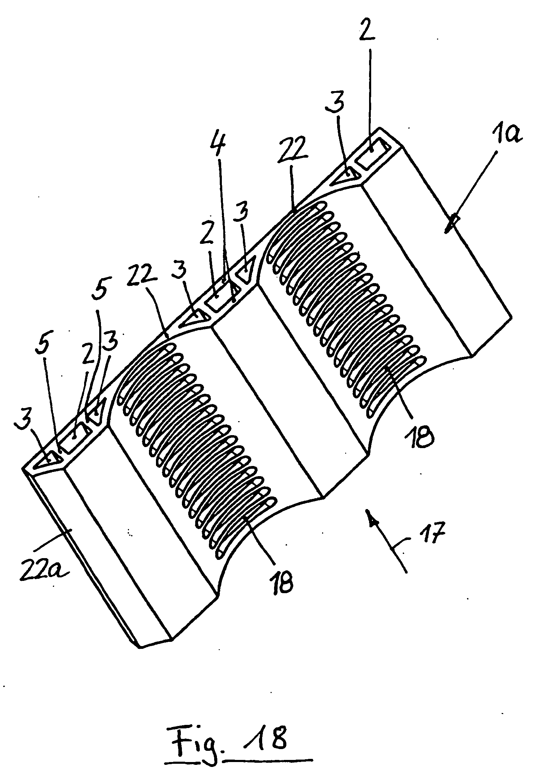

- Fig. 18: zeigt einen Ausschnitt aus einer weiteren Abwandlung der in Figur 14 dargestellten Heizeinrichtung in einer Schrägansicht,

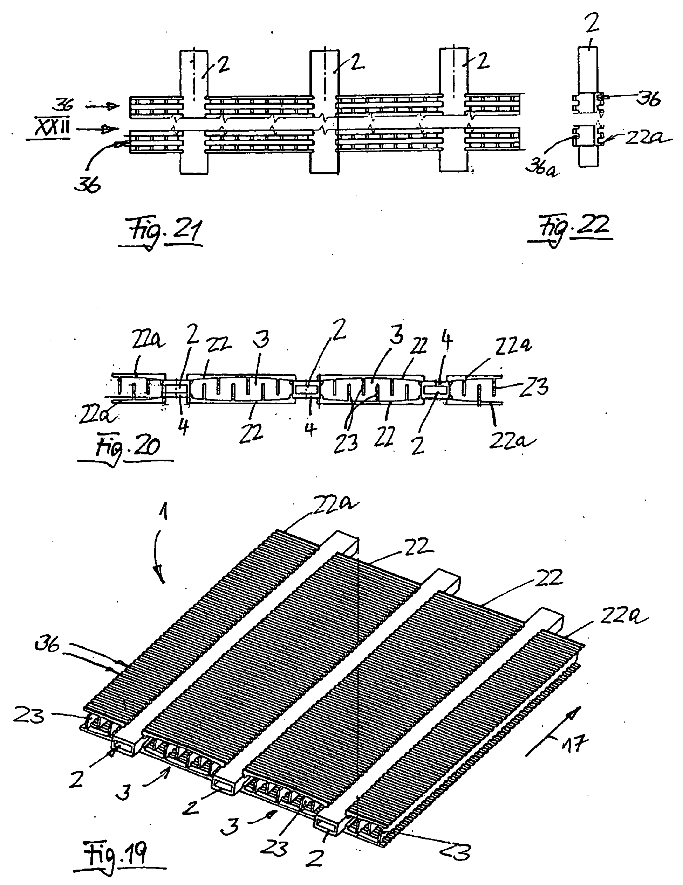

- Fig. 19: zeigt einen Wärmeübertrager in einer Schrägansicht, bei welchem von Hohlkammern, die Heizelemente aufnehmen, jeweils vier Stege bzw. Wände ausgehen, die nur über diese Hohlkammern miteinander verbunden sind,
- Fig. 20: zeigt den Wärmeübertrager aus Figur 19 in einer Ansicht in Strangpressrichtung auf eines seiner Enden,
- Fig. 21: zeigt den Wärmeübertrager aus Figur 19 in einer Draufsicht auf eine der Breitseiten, welche angeströmt wird,
- Fig. 22: zeigt die Ansicht XXII auf die Schmalseite des Wärmeübertragers gemäß Figur 21,

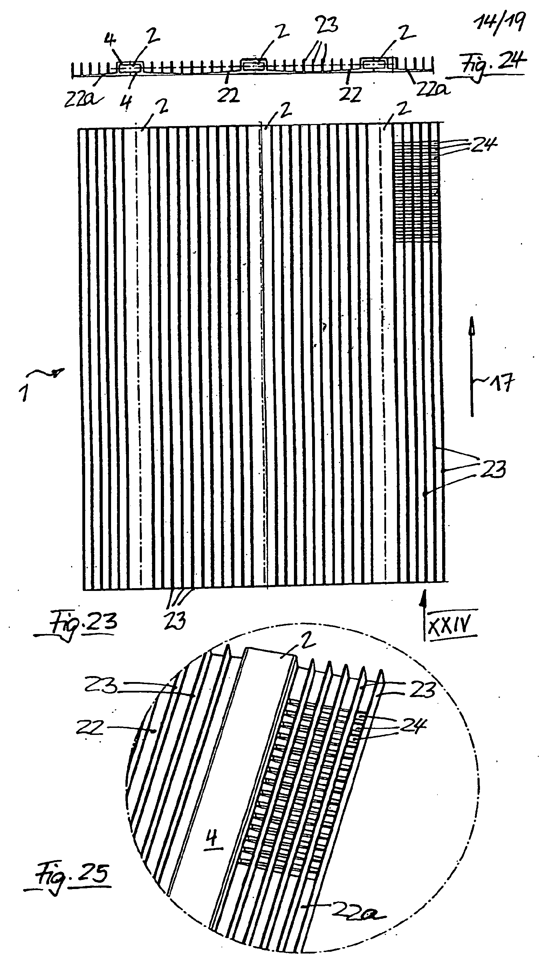

- Fig. 23: zeigt einen weiteren Wärmeübertrager, in welchem die Hohlkammern, welche z. B. PTC-Heizelemente aufnehmen, durch nur einen Steg miteinander verbunden sind, in einer Draufsicht auf eine seiner angeströmten Breitseiten,
- Fig. 24: zeigt die Ansicht XXIV auf das eine Ende des Wärmeübertragers gemäß Figur 23,
- Fig. 25: zeigt als Detail vergrößert in einer Schrägansicht einen Ausschnitt aus der Draufsicht gemäß Figur 23,

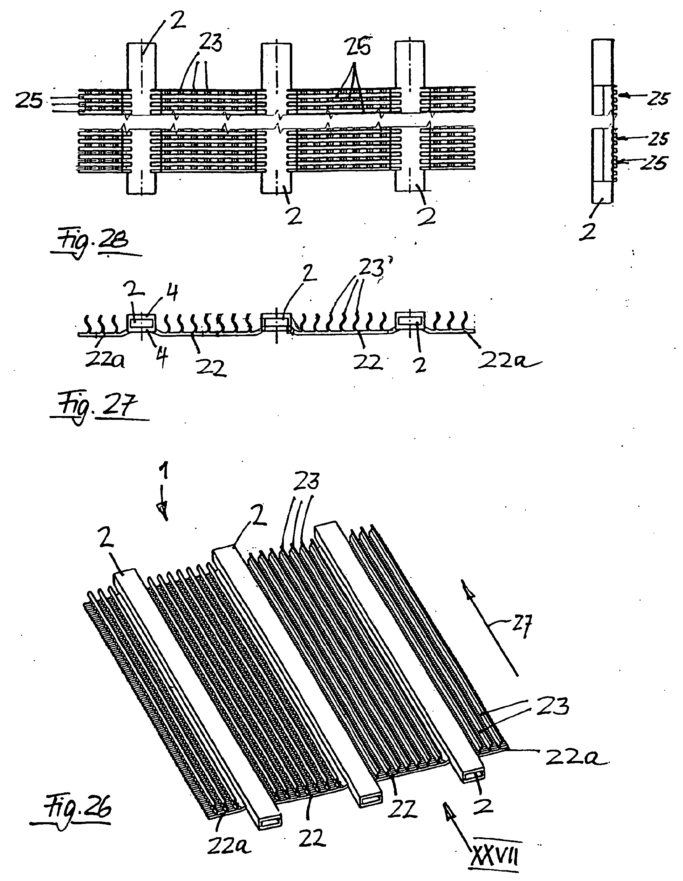

- Fig. 26: zeigt in einer Schrägansicht einen weiteren Wärmeübertrager, dessen Hohlkammern, die z. B. PTC-Heizelemente aufnehmen, durch nur einen Steg miteinander verbunden sind,
- Fig. 27: zeigt die Ansicht XXVII auf das eine Ende des Wärmeübertragers gemäß Figur 26,
- Fig. 28: zeigt die Draufsicht XXVIII auf jene Breitseite des Wärmeübertragers, welche in Figur 26 dem Blick abgewandt ist,

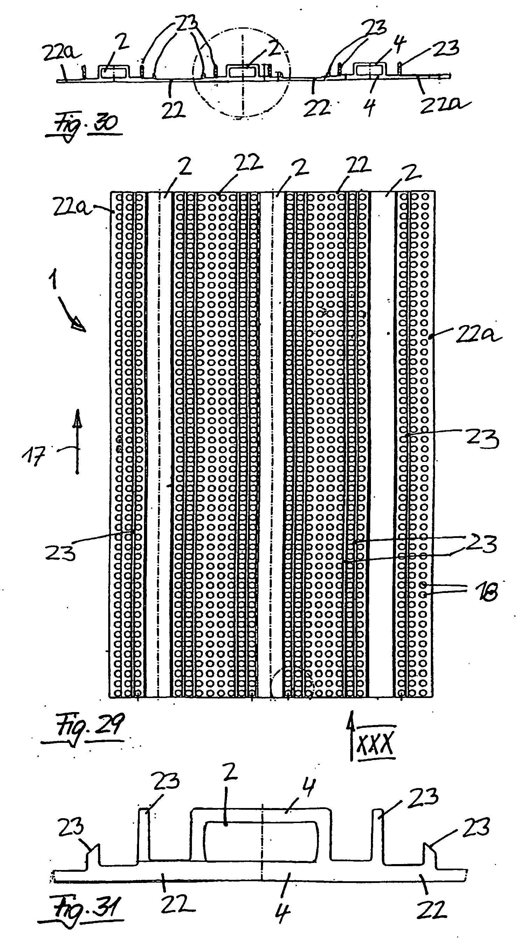

- Fig. 29: zeigt einen gegenüber der Figur 26 abgewandelten Wärmeübertrager in einer Draufsicht auf seine Anströmseite,
- Fig. 30: zeigt die Ansicht XXX auf das eine Ende des Wärmeübertragers gemäß Figur 29,
- Fig. 31: zeigt als Detail den Ausschnitt B aus Figur 30,

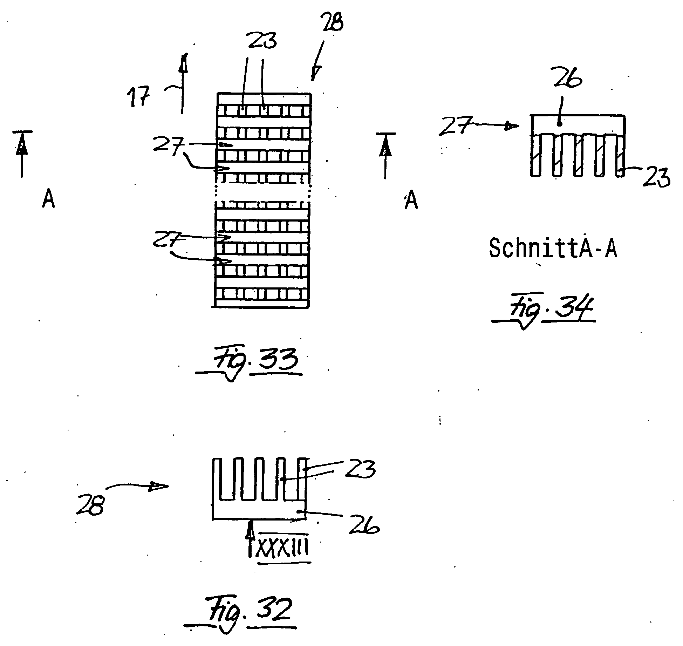

- Fig. 32: zeigt ein stranggepresstes Wärmeübertragerprofil in einer Ansicht auf eines seiner Enden,
- Fig. 33: zeigt die Draufsicht XXXIII gemäß Figur 32 auf eine der Breitseiten des Wärmeübertragerprofils,
- Fig. 34: zeigt den Schnitt A-A gemäß Figur 33,

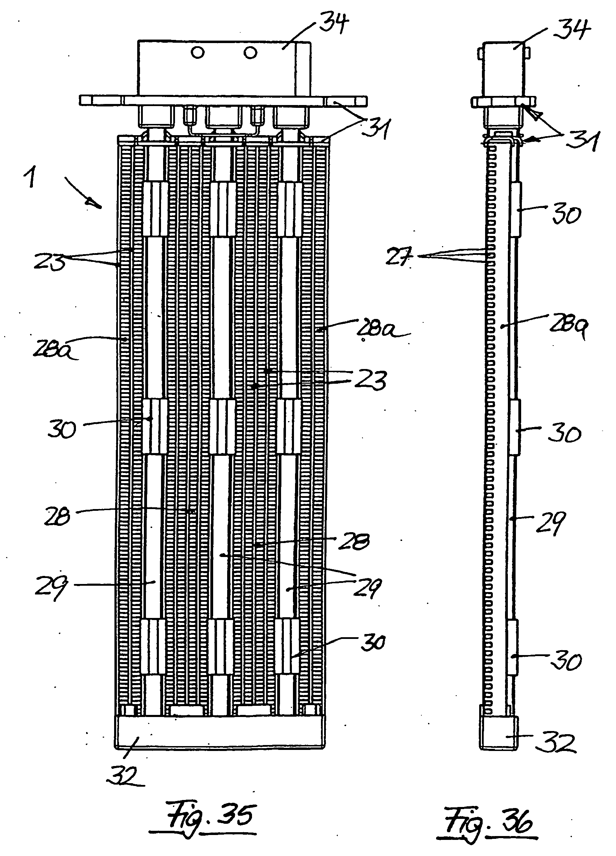

- Fig. 35: zeigt eine Heizvorrichtung, welche mit den in den Figuren 32 bis 34 dargestellten Wärmeübertragerprofilen hergestellt ist, in einer Draufsicht auf eine seiner Breitseiten,
- Fig. 36: zeigt die Ansicht XXXVI auf eine Schmalseite der Heizvorrichtung gemäß Figur 35,

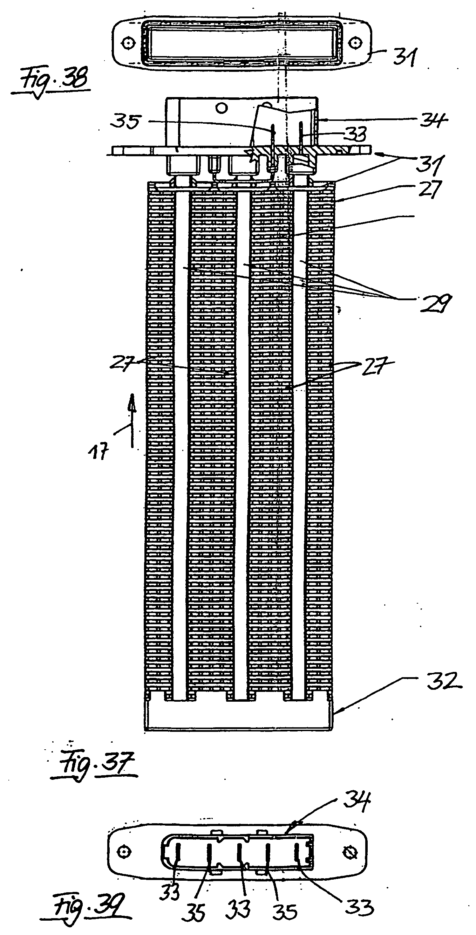

- Fig. 37: zeigt die Draufsicht auf die in Figur 35 dem Betrachter abgewandte Breitseite der Heizvorrichtung,
- Fig. 38: zeigt eine Draufsicht auf das Anschlussgehäuse der Heizvorrichtung in Figur 37, und
- Fig. 39: zeigt eine Draufsicht auf das Innere des Anschlussgehäuses gemäß den Figuren 37 und 38.

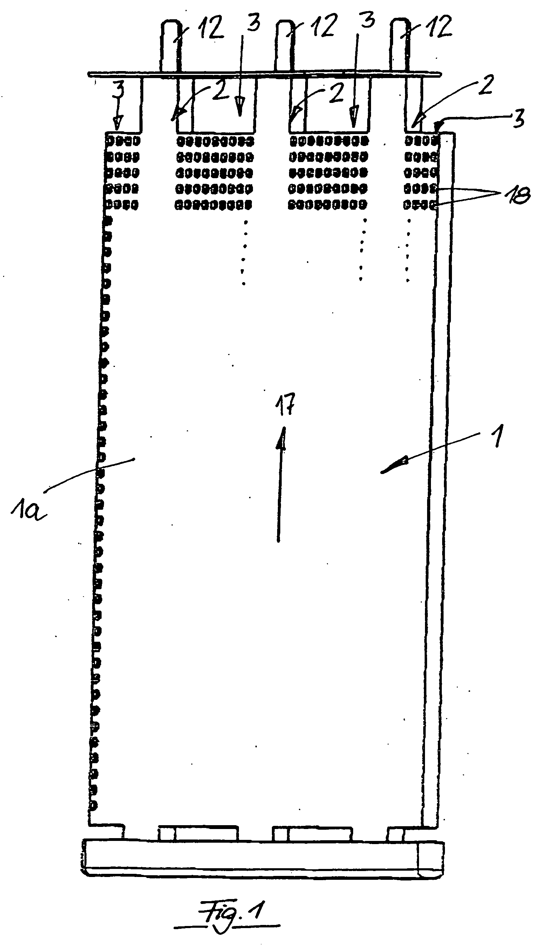

Figur 1 zeigt eine Ansicht einer Heizvorrichtung mit einem einzigen Wärmeübertrager 1 aus einem Strangpressprofil 1 a. Der Wärmeübertrager 1 ist ein flaches Gebilde, in welchem mehrere Hohlkammern 2 vorgesehen sind, in welchen jeweils eine Heizeinrichtung angeordnet ist, von welcher eine elektrische Zuleitung 12 aus einem Ende der Hohlkammer 2 elektrisch isoliert herausgeführt ist. Beide Enden der Hohlkammer 2 sind mit einem hinreichend wärmebeständigen Kunststoff verschlossen, z. B. mit einem wärmehärtbaren Kunstharz.

An beide Seiten einer jeden Hohlkammer 2 schließt jeweils eine weitere Kammer 3 des Strangpressprofils 1a an, bei welcher die Außenwände 6 jedoch geöffnet sind, wie es weiter unten noch im Einzelnen beschrieben wird.

Die Hohlkammern 2 des Strangpressprofils 1a stehen ein Stück weit über die weiteren Kammern 3 vor und erleichtern das Anbringen eines elektrischen Steuergerätes auf der einen Seite und einer Halterung für den Einbau der Heizvorrichtung auf der anderen Seite.

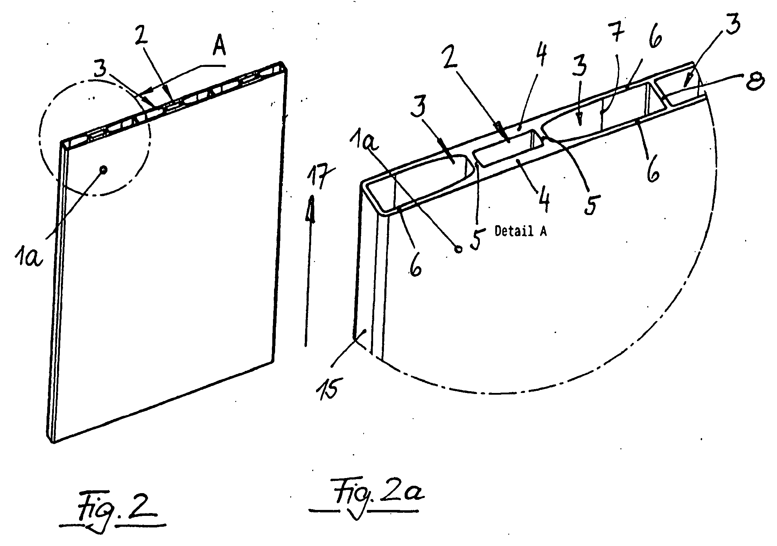

Figur 2 und das in Figur 2a dargestellte Detail zeigen ein Strangpressprofil 1a aus einem gut wärmeleitenden Metall für eine erfindungsgemäße Heizvorrichtung. Das Strangpressprofil 1 a hat mehrere zueinander parallele Hohlkammern 2 mit einem rechteckigen, geschlossenen Querschnitt, welche zum Aufnehmen von länglichen Heizeinrichtungen 9 vorgesehen sind. Zu beiden Seiten einer jeden Hohlkammer 2 hat das Strangpressprofil 1a jeweils eine weitere Kammer 3, deren lichter Querschnitt größer ist als der lichte Querschnitt der Hohlkammer 2. Die größte Wandstärke hat das Strangpressprofil 1a dort, wo es die Außenwände 4 der Hohlkammern 2 bildet. Ausgehend von den Innenwänden 5 der Hohlkammer 2 verjüngen sich die Außenwände 6 der weiteren Kammern 3 stetig bis zu einer Stelle 7, um dann bis zu Trennwänden 8 gleich zu bleiben, welche je zwei der weiteren Kammern 3 trennen.

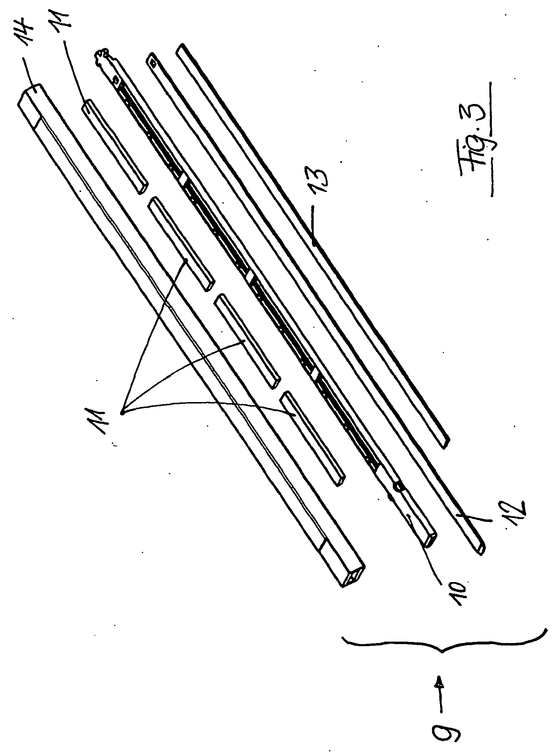

Figur 3 zeigt den Aufbau einer stabförmigen Heizeinrichtung 9. Sie hat einen Montagerahmen 10, welcher vorzugsweise aus einem hinreichend wärmebeständigen Kunststoff besteht und dazu dient, eine Anzahl von quaderförmigen PTC-Heizelementen 11 aufzunehmen. Eine Zuleitung 12 dient dazu, die PTC-Heizelemente 11 auf ihrer einen Seite elektrisch zu kontaktieren. Die Zuleitung 12 besteht z. B. aus einem verzinnten Kupferstreifen und wird auf ihrer den PTC-Heizelementen 11 abgewandten Seite durch einen streifenförmigen Isolator 13 abgedeckt, welcher vorzugsweise aus einer Keramik, z. B. aus Aluminiumoxid, besteht. Der Isolator 13, die Zuleitung 12 und der Montagerahmen 10 mit den Heizelementen 11 werden in ein stabförmiges Gehäuse 14 eingeführt und darin fixiert. Das Gehäuse 14 ist elektrisch gut leitend und besteht vorzugsweise aus Aluminium oder aus einer Aluminiumlegierung. Das Gehäuse 14 kontaktiert die der Zuleitung 12 abgewandte Seite der PTC-Heizelemente 11, wohingegen der Isolator 13 die Zuleitung 12 vom Gehäuse 14 isoliert.

Der Heizstab 9 kann in eine Kammer des Strangpressprofils 1a eingeführt werden. Bevorzugt ist es jedoch, auf das in Figur 3 dargestellte gesonderte Gehäuse 14 zu verzichten und die Anordnung aus den PTC-Heizelementen 11, aus dem Montagerahmen 10, aus der Leiterbahn 12 und aus dem Isolator 13 unmittelbar in die Hohlkammer 2 des Strangpressprofils 1a einzuführen und darin festzulegen. Das Festlegen geschieht am einfachsten durch Verpressen, indem auf die beiden Außenwände 4 der Hohlkammer 2 Druck ausgeübt wird, welcher zu einer kleinen bleibenden Verformung der Außenwände 4 führt und nicht nur die Heizeinrichtung 9 fixiert, sondern auch eine gut wärmeleitende Verbindung der Heizelemente 11 mit dem Strangpressprofil 1a bewirkt. Vorzugsweise erfolgt das Verpressen über die gesamte Länge des Strangpressprofils 1a.

Figur 4 zeigt einen Längsschnitt durch einen Abschnitt der Heizvorrichtung gemäß Figur 1 mit einer Heizeinrichtung 9, welche - mit Ausnahme des Gehäuses 14 - die in Figur 3 dargestellten Bestandteile hat, von denen der Montagerahmen 10 allerdings aus Gründen der Übersichtlichkeit nicht dargestellt ist. Die gestrichelte Linie 16 gibt den Stromfluß von einer Klemme einer Batterie mit der Spannung U_{BAT} gegen das auf der Oberfläche des Wärmeübertragers 1 liegende Massepotential an.

Figur 5 zeigt eine Abwandlung des in Figur 4 dargestellten Beispiels dahingehend, dass Paare von PTC-Heizelementen 11 vorgesehen sind, zwischen denen die Zuleitung 12 eingeklemmt ist. Diese Ausführungsform hat den Vorteil, dass ein Isolator 13 überflüssig ist und eine größere Heizleistung, bezogen auf die Längeneinheit der Heizeinrichtung 9, erzeugt werden kann.

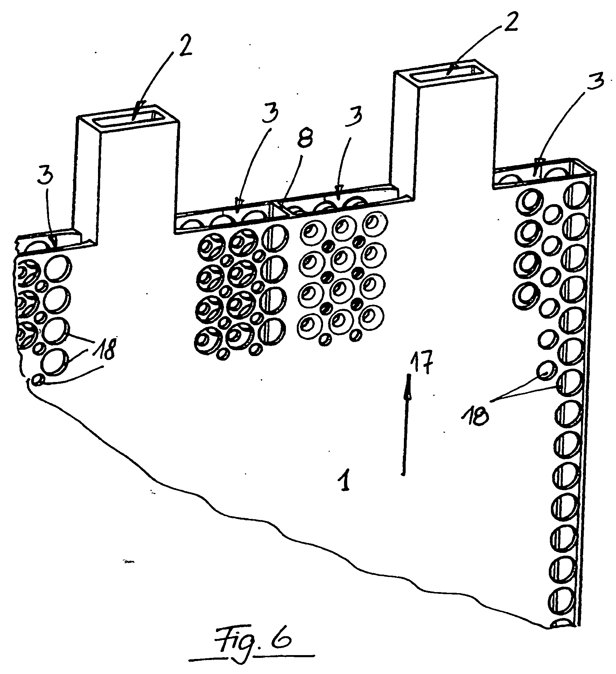

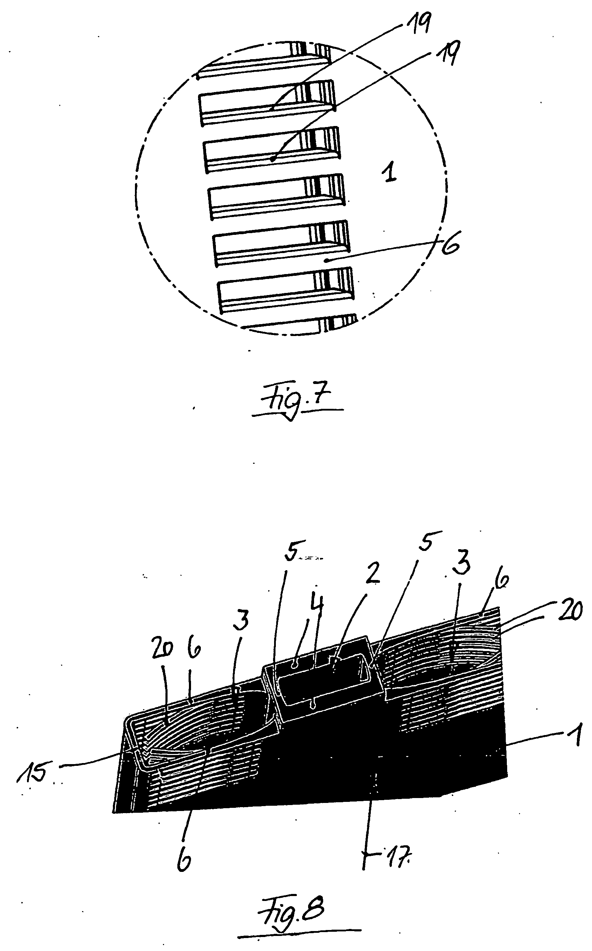

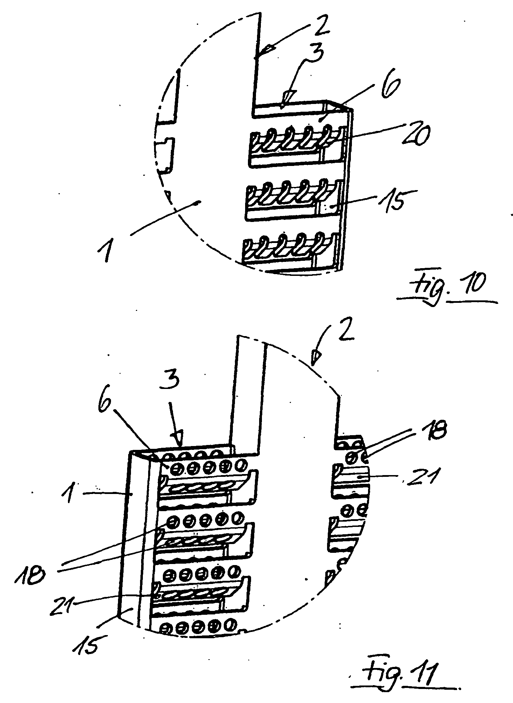

Das Medium, auf welches die von den PTC-Heizelementen 11 erzeugte Wärme übertragen werden soll, durchströmt die weiteren Kammern 3 nicht in der Strangpressrichtung 17, welche mit der Längsrichtung der Heizeinrichtungen 9 übereinstimmt; sondern quer dazu. Zu diesem Zweck sind die Außenwände 6 der weiteren Kammern 3 geöffnet. Das geschieht vorzugsweise nach dem Einsetzen der Heizelemente 11 in die Hohlkammern 2. Das Öffnen der Außenwände 6 kann auf unterschiedliche Weise geschehen, z. B. durch Ausstanzen von Löchern 18, wie sie in den Figuren 6 und 11 dargestellt sind. Eine andere Möglichkeit ist das Bilden von Blenden 19, welche durch Einschneiden und nachfolgendes Eindrücken der Außenwände 6 gebildet werden, wie es in Figur 7 dargestellt ist. Eine dritte Möglichkeit zeigt Figur 8: Durch einen Stanzvorgang werden Lamellen 20 gebildet, welche quer zur Strangpressrichtung 17 verlaufen, in der Nachbarschaft der Hohlkammern 2 beginnen und kurz vor den Trennwänden 8 bzw. vor den Endwänden 15 enden. Die Lamellen 20 werden einwärts gebogen, so dass sich ihre freien Enden mit zunehmender Entfernung von der Hohlkammer 2, von welcher die Lamellen 20 ausgehen, einander annähern, wie es in Figur 8 dargestellt ist.

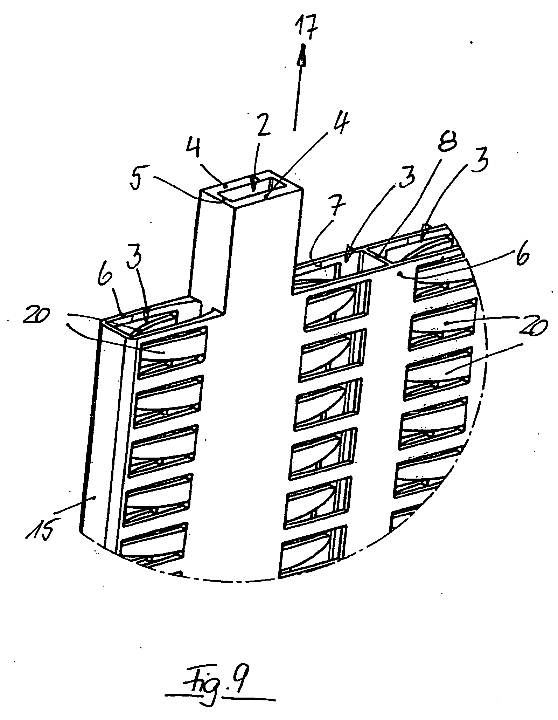

Figur 9 zeigt ein Ausführungsbeispiel des aus dem Strangpressprofil 1a gebildeten Wärmeübertragers 1, bei welchem die Lamellen 20 breiter sind als im Ausführungsbeispiel gemäß Figur 8.

Figur 10 zeigt ein Ausführungsbeispiel eines Wärmeübertragers 1, bei welchem die Außenwände 6 der weiteren Kammern 3 kammartig geschlitzt sind dadurch gebildete Lamellen 20 sind in die weiteren Kammern 3 hinein gebogen.

Das in Figur 11 dargestellte Ausführungsbeispiel unterscheidet sich von dem in Figur 10 dargestellten Ausführungsbeispiel darin, dass anstelle von Lamellen 20 Löcher 18 in der Wand 6 und auf Laschen 21 vorgesehen sind, welche durch Einschneiden der Wand 6 gebildet und in die weiteren Kammern 6 hinein gebogen sind.

Den Ausführungsbeispielen, die in den Figuren 6 bis 11 dargestellt sind, ist es gemeinsam, dass die Wärmeübertrager 1 von dem zu erwärmenden Medium quer durchströmt werden. An den Rändern der Löcher 18, an den Schnittkanten, Blenden 19 und/oder Lamellen 20 findet eine Wirbelbildung statt, welche zu einem wesentlich besseren Wärmeaustausch führt als die im Stand der Technik praktizierte tangentiale Anströmung der Oberfläche (Wärmetauscherfläche) des Wärmeübertragers 1. Der bei der quer erfolgenden Durchströmung des Wärmeübertragers 1 auftretende Druckverlust kann durch die Wahl der Form und Größe der Löcher 18 und durch die Form der ausgeschnittenen Blenden 19 und/oder Lamellen 20 in weiten Grenzen variiert und im Anwendungsfall angepasst werden. Löcher 18, Blenden 19 und Lamellen 20 können in einem Wärmeübertrager 1 auch miteinander kombiniert werden.

Die in den Figuren 2 und 2a dargestellte Heizvorrichtung hat im Bereich der weiteren Kammern 3 noch keine Öffnung sondern zeigt das Strangpressprofil vor dem Einbringen von Öffnungen in die Außenwände 6 der weiteren Kammern 3.

Im Zuge der Herstellung der Öffnungen in den Außenwänden 6 können auch die PTC-Heizelemente 11 in den Hohlkammern 2 verpresst werden, insbesondere durch Verwendung eines Folgeverbundwerkzeuges, welches in einem Arbeitsgang die PTC-Heizelemente 11 in Wärmeübertrager 1 verpresst, die Öffnungen bildet und die Außenwand 6 ggf. eindrückt.

Anstatt neben den Hohlkammern 2 weitere Kammern vorzusehen, kann man die Hohlkammern 2 auch durch je einen Steg, d. h. durch nur eine einzige Wand 22 verbinden und an die beiden äußeren Hohlkammern 2 nach außen hin eine jeweils weitere einzelne Wand 22a anschließen lassen, welche ebenfalls keine weitere Kammer bildet. Die Stege 22 und die nach außen ragenden beiden einzelnen Wände 22a haben vorzugsweise ebensolche Öffnungen wie die Wände 6 der weiteren Kammern 3 in den vorhergehend beschriebenen Beispielen.

Die Figuren 12 und 13 zeigen einen solchen Wärmeübertrager, welcher mit einem Strangpressprofil gebildet ist, welcher aus z. B. drei Hohlkammern 2 besteht, welche durch als Stege ausgebildete ebene Wände 22 verbunden sind, wobei an die beiden äußeren Hohlkammern 2 jeweils eine ebene Wand 22a anschließt, die mit den ebenen Wänden 22 vorzugsweise fluchtet. Ein solcher Wärmeübertrager lässt sich sehr einfach durch Strangpressen herstellen. Die ebenen Wände 22, 22a sollen vom Luftstrom quer angeströmt werden. Einen günstigen Wirkungsgrad der Wärmeübertragung erhält man, indem man wenigstens einen Teil der Wände 22, 22a mit Löchern versieht.

Das in den Figuren 14 und 15 dargestellte Ausführungsbeispiel eines Wärmeübertragers unterscheidet sich von dem in den Figuren 12 und 13 dargestellten Ausführungsbeispiel dadurch, dass die als Stege ausgebildeten Wände 22, durch welche die Hohlkammern 2 verbunden sind, und die von den beiden äußeren Hohlkammern 2 nach außen ragenden Wände 22a plankonkav ausgebildet sind und dort, wo sie auf den Hohlkammern 2 fußen, ungefähr so dick sind wie diese. Die Wände 22 werden dann stetig dünner, z. B. mit einer kreisbogenförmigen Kontur, und haben in der Mitte zwischen zwei Hohlkammern 2 ihre dünnste Stelle. Die nach außen ragenden Wände 22a entsprechen je einer halben Wand 22. Der Vorteil dieser Ausführungsform, bei welcher die Breitseiten der Hohlkammern 2 Außenwände 4 oder einen Teil der Außenwände des Strangpressprofils bilden und von den Schmalseiten der Hohlkammern 2 weitere Wände 22, 22a des Strangpressprofils ausgehen, liegt darin, dass die in den Hohlkammern 2 erzeugte Wärme besser auf die Wände 22 und 22a übertragen werden kann als im Beispiel der Figuren 12 und 13. Dadurch, dass die Wände mit zunehmendem Abstand von den Hohlkammern 2 dünner werden, wird Material eingespart, ohne den Wärmeübergang zu verschlechtern. Auch in diesem Fall ist wenigstens ein Teil der Wände 22 und 22a gelocht.

Das in den Figuren 16 und 17 dargestellte Ausführungsbeispiel unterscheidet sich von dem in den Figuren 14 und 15 dargestellten Ausführungsbeispiel dahingehend, dass die als Stege ausgebildeten Wände 22 und 22a nicht plankonkav sondern bikonkav ausgebildet sind und Löcher 18 aufweisen, die vorzugsweise in regelmäßigem Muster angeordnet sind und durch Bohren oder Stanzen gebildet sein können.

Das in Figur 18 dargestellte Ausführungsbeispiel unterscheidet sich von dem in den Figuren 14 und 15 dargestellten Ausführungsbeispiel darin, dass aus den Wänden 22, welche sich zwischen den Hohlkammern 2 erstrecken, lang gestreckte Löcher 18 ausgeschnitten sind und dass die plankonvexen Wände 22 und 22a dort, wo sie auf den Hohlkammern 2 fußen, jeweils eine weitere Kammer 3 aufweisen, welche sich parallel zur Hohlkammer 2 erstreckt. Diese weitere Kammer 3 spart Material ohne nennenswerte Einbuße bei der Wärmeübertragung von den Wänden der Hohlkammer 2 auf die Wände 22 und 22a.

Das in den Figuren 19 bis 22 dargestellte Ausführungsbeispiel zeigt einen Wärmeübertrager 1, in welchem drei zueinander parallele stabförmige Hohlkammern 2 durch je zwei einander gegenüberliegende Wände 22 miteinander verbunden sind, welche im Querschnitt plankonkav ausgebildet sind. Von den beiden äußeren Hohlkammern 2 ragen jeweils zwei einander gegenüberliegende plankonkave Wände 22a in entgegengesetzte Richtungen nach außen. Die ebenen Außenflächen der Wände 22 und 22a fluchten miteinander, wie in Figur 20 dargestellt. Die Wände 22a stimmen annähernd mit den halben Wänden 22 überein. Der gegenseitige Abstand der einander gegenüberliegenden Wände 22 bzw. 22a ist größer als die von Außenseite zu Außenseite der Wände 4 gemessene Dicke des Strangpressprofils im Bereich der Hohlkammern 2. Das erleichtert es, Schlitze 36, wie nachstehend beschrieben, in die Wände 22 und 22a durchgehend zu fräsen.

Sowohl die Wände 22 als auch die Wände 22a sind mit Rippen 23 versehen, welche parallel zueinander und zu den Hohlkammern 2 verlaufen und sich jeweils von der einen Wand 22 bzw. 22a in Richtung zur gegenüberliegenden Wand 22 bzw. 22a erstrecken, ohne diese zu berühren. Die Rippen 23 sind so angeordnet, dass im Querschnitt gemäß Figur 20 einer Rippe 23 auf der einen Wand 22 bzw. 22a eine Rippe 23 auf der gegenüberliegenden Wand 22 bzw. 22a folgt, so dass der Freiraum zwischen einander gegenüberliegenden Wänden 22 bzw. 22a mäanderförmig verläuft. Die Rippen 23 vergrößern die Wärmeaustauschfläche. Der plankonkave Querschnitt der Wände 22 und 22a hat wie im Beispiel der Figuren 14 und 15 den Zweck, die von den Hohlkammern 2 ausgehende Wärme möglichst gleichmäßig über die Wände 22 und 22a zu verteilen. Zusätzlich sind die Wände 22 und 22a ähnlich wie im Beispiel der Figur 18 quer zur Strangpressrichtung 17 geschlitzt. Die Schlitze 36 können durch Fräsen erzeugt sein. Vorzugsweise sind die Schlitze 36 so gelegt, dass die auf der einen Seite des Wärmeübertragers 1 liegende Schlitze 36 gegenüber den auf der anderen Seite liegenden Schlitze 36a versetzt angeordnet sind, wie es in Figur 22 dargestellt ist. Ein solcher Versatz ist für das Erzielen eines hohen Wikungsgrades beim Wärmetausch mit einem gasförmigen oder flüssigen Medium, welches den Wärmeübertrager quer anströmt, günstig.

Das in den Figuren 23 bis 25 dargestellte Ausführungsbeispiel eines Wärmeübertragers 1 unterscheidet sich von dem in den Figuren 19 bis 22 dargestellten Ausführungsbeispiel im wesentlichen darin, dass die stabförmigen Hohlkammern 2 nur durch jeweils eine als Steg ausgebildete Wand 22 miteinander verbunden sind und dass von den beiden äußeren Hohlkammern 2 nur jeweils eine einzige Wand 22a ausgeht, wobei die Wände 22a wiederum die halbe Länge der Wände 22 haben und die ebenen Oberflächen der plankonkaven Wände 22 und 22a in einer gemeinsamen Flucht liegen. Die auf den konkaven Oberflächen der Wände 22, 22a stehenden Rippen 23 sind in der Höhe so bemessen, dass sie in einer Ebene enden, welche mit der den Wänden 22 gegenüberliegenden Wand 4 der Hohlkammern 2 fluchtet, siehe Figur 24.

Die Wände 22 und 22a sind von der den Rippen 23 abgewandten Seite her geschlitzt. Die Schlitze 24 verlaufen quer zur Strangpressrichtung 17, haben eine keilförmige Kontur und können sich bis in die Rippen 23 hinein erstrecken, jedoch nicht bis zu deren Spitze.

Der in den Figuren 26 bis 28 dargestellte Wärmeübertrager unterscheidet sich von dem in den Figuren 23 bis 25 dargestellten Wärmeübertrager im wesentlichen darin, dass die Wände 22 und 22a in der Nachbarschaft der Hohlkammern 2 einen Knick aufweisen, wie in Figur 27 dargestellt, und dass die Rippen 23 kein geradliniges, sondern ein S-förmiges Querschnittsprofil haben, wie in Figur 27 dargestellt. Auch in diesem Ausführungsbeispiel sind die Wände 22 und 22a quer zur Strangpressrichtung 17 geschlitzt. Wie im Beispiel der Figuren 23 bis 25 gehen die Schlitze 25 von der den Rippen 23 abgewandten Seite der Wände 22, 22a aus und können sich bis in die Rippen 23 hinein erstrecken, müssen sich aber nicht bis in die Rippen 23 hinein erstrecken. Anders als im Ausführungsbeispiel der Figuren 23 bis 25 sind die Schlitze 25 im vorliegenden Fall im Querschnitt nicht keilförmig, sondern rechteckig. Sie lassen sich in entsprechender Weise wie in den Figuren 19 bis 22 durch Fräsen bilden.

Das in den Figuren 29 bis 31 dargestellte Ausführungsbeispiel unterscheidet sich von dem in den Figuren 23 bis 25 dargestellten Beispiel dahingehend, dass die Wände 22, 22a ausgehend von den Hohlkammern 2 eine stufenweise abnehmende Dicke haben. An jeder Stufe ist eine Rippe 23 vorgesehen. Die Höhe der Rippen 23 nimmt mit zunehmenden Abstand von den Hohlkammern 2 ab. Mit dieser Geometrie ist das Querschnittsprofil des Wärmeübertragers 1 optimal an den Wärmefluss angepasst. Da die in den Wänden 22, 22a fließende Wärme mit zunehmender Entfernung von den Hohlkammern 2 abnimmt, erreicht man durch die abnehmende Dicke der Wände 22 und 22a und durch die abnehmende Höhe der Rippen 23 einen verhältnismäßig geringen Temperaturgradienten im Wärmeübertrager, so dass der Wärmeübertrager hinsichtlich seines Wirkungsgrades und eines sparsamen Materialeinsatzes besonders günstig ist.

Ein weiterer Unterschied zum Ausführungsbeispiel gemäß den Figuren 23 bis 25 besteht darin, dass die Wände 22 und 22a nicht geschlitzt, sondern gelocht sind, wobei die Löcher vorzugsweise kreisrund sind. Sie können gebohrt oder gestanzt sein und sind zweckmäßigerweise so angeordnet, dass sie nicht in die Rippen 23 eingreifen.

Ein weiterer Vorteil des Ausführungsbeispiels in den Figuren 29 bis 31 besteht darin, dass es keine überstehenden Hohlstäbe mit den Hohlkammern 2 darin vorsieht. Das spart einen Arbeitsgang zum Freilegen der überstehenden Hohlstäbe, z. B. durch Fräsen, und spart dementsprechend auch Material. Ein entsprechender Vorteil gilt für die Ausführungsbeispiele in den Figuren 18 und 23 bis 25.

Die Figuren 32 bis 34 zeigen ein stranggepresstes Profil 28 mit einem kammartigen Querschnitt, wie in Figur 32 dargestellt. Dieses Strangpressprofil 28 ist von der Profilbasis 26 aus quer zur Strangpressrichtung 17 geschlitzt. Die Schlitze 27 können gefräst sein und erstrecken sich durch die gesamte Proflbasis 26 und ein wenig in die Rippen 23 hinein, so dass es die Rippen 23 sind, welche das quer geschlitzte Strangpressprofil 28 zusammen halten.

Die Figuren 35 bis 39 zeigen, wie man mit solchen Strangpressprofilen 28 eine Heizvorrichtung zusammenbauen kann. Zu diesem Zweck werden drei gesonderte Hohlkammerprofile 29 parallel zueinander so angeordnet, dass zwischen ihnen je ein Strangpressprofil 28 gemäß den Figuren 32 bis 34 angeordnet ist. An die beiden äußeren Hohlkammerprofile 29 werden zwei weitere Strangpressprofile 28a gelegt, welche ähnlich den Strangpressprofilen 28 sind, aber welche zwischen den Hohlkammerprofilen 29 liegen, nur halb so breit sind wie die Strangpressprofile 28. Durch Klammern 30, welche jeweils ein Hohlkammerprofil 29 übergreifen und in die beiden benachbarten Strangpressprofile 28 bzw. 28a eingreifen, wird ein Zusammenhalt zwischen den Strangpressprofilen 28, 28a und den Hohlkammerprofilen 29 hergestellt, der durch Halteflansche 31 und 32 vervollständigt wird, welche an den einander abgewandten Enden der Anordnung aus den Strangpressprofilen 28 und 28a und den Hohlkammerprofilen 29 montiert werden.

Die Beispiele gemäß der Figurer 33 bis 39 fallen nicht unter der schutzbereich der Ansprüche.

PTC-Elemente, welche in den Hohlkammerprofilen 29 angeordnet werden, werden durch starre elektrische Zuleitungen 33 mit Strom versorgt, welche in ein Anschlussgehäuse 34 hineinragen. In das Anschlussgehäuse 34 ragt darüber hinaus eine Masseleitung 35 hinein, welche mit der Außenseite der Strangpressprofile 28, 28a und der Hohlkammerprofile 29 verbunden ist. Die Zuleitungen 33 und die Masseleitung 35 können über Steckverbinder z. B. an das Bordnetz eines Kraftfahrzeuges bzw. an ein Steuergerät angeschlossen werden.

### Bezugszahlenliste:

- 1.: Wärmeübertrager
- 1a.: Strangpressprofil
- 2.: Hohlkammer
- 3.: weitere Kammer
- 4.: Außenwände von 2
- 5.: Innenwände von 2
- 6.: Außenwände von 3
- 7.: Stelle
- 8.: Trennwand
- 9.: Heizeinrichtung
- 10.: Montagerahmen
- 11.: Heizelement
- 12.: Zuleitung
- 13.: Isolator
- 14.: Gehäuse
- 15.: Endwand
- 16.: Linie
- 17.: Strangpressrichtung
- 18.: Löcher
- 19.: Blenden
- 20.: Lamellen
- 21.: Laschen
- 22.: Wand, Steg
- 22a.: Wand
- 23.: Rippen
- 24.: Schlitze
- 25.: Schlitze
- 26.: Profilbasis
- 27.: Schlitze
- 28.: Strangpressprofil
- 28a.: Strangpressprofil
- 29.: Hohlkammerprofil
- 30.: Klammer
- 31.: Halteflansch
- 32.: Halteflansch
- 33.: Zuleitung
- 34.: Anschlussgehäuse
- 35.: Masseleitung
- 36.: Schlitze
- 36a.: Schlitze

## Patentansprüche

1. Heizvorrichtung
mit wenigstens einer Heizeinrichtung (9), in welcher ein oder mehrere elektrische Heizelemente (11) angeordnet sind,
und mit wenigstens einem Wärmeübertrager (1), welcher mit der wenigstens einen Heizeinrichtung (9) verbunden ist, Wärmetauscherflächen hat, und aus einem Strangpressprofil (1a, 28, 28a) gebildet ist, in welches die wenigstens eine Heizeinrichtung (9) eingefügt ist,
**dadurch gekennzeichnet, dass** wenigstens ein Teil der Wände (6, 22, 22a) des Strangpressprofils (1a), welche nicht an einem Heizelement (11) liegen, Öffnungen aufweist, durch welche das Strangpressprofil (1a, 28, 28a) von einem gasförmigen oder flüssigen Medium quer zur Strangpressrichtung (17) durchströmt werden kann,
wobei die wenigstens eine Heizeinrichtung (9) in eine Hohlkammer (2) des Wärmeübertragers (1) eingefügt ist.

2. Heizvorrichtung nach Anspruch 1, **dadurch gekennzeichnet, dass** wenigstens ein Teil der Öffnungen in den Wänden (6, 22, 22a) Strangpressprofils (1a, 28, 28a) Ausschnitte oder Löcher (18) sind.

3. Heizvorrichtung nach Anspruch 1 oder 2, **dadurch gekennzeichnet, dass** wenigstens ein Teil der Öffnungen in den Wänden (6, 22, 22a) des Strangpressprofils (1a, 28, 28a) durch Einschnitte gebildet ist.

4. Heizvorrichtung nach Anspruch 3, **dadurch gekennzeichnet, dass** von den Einschnitten begrenzte Teile der Wände (6, 22, 22a) des Strangpressprofils (1a) aus der jeweiligen Wand (6) gebogen sind.

5. Heizvorrichtung nach Anspruch 4, **dadurch gekennzeichnet, dass** die von den Einschnitten begrenzten Teile der Wände (6, 22, 22a) des Strangpressprofils (1a) in dieses hinein gebogen sind.

6. Heizvorrichtung nach einem der vorstehenden Ansprüche, **dadurch gekennzeichnet, dass** alle Wände (22, 22a) des Strangpressprofils (1a, 28, 28a), welche nicht an einem Heizelement (11) liegen, solche Öffnungen aufweisen.

7. Heizvorrichtung nach einem der vorstehenden Ansprüche , **dadurch gekennzeichnet, dass** die Hohlkammern (2) im quer zur Strangpressrichtung (17) durch das Strangpressprofil (1a, 28, 28a) gelegten Schnitt geschlossen ausgebildet ist.

8. Heizvorrichtung nach einem der vorstehenden Ansprüche, **dadurch gekennzeichnet, dass** der Wärmeübertrager (1) zugleich als Gehäuse der wenigstens einen Heizeinrichtung (9) ausgebildet ist.

9. Heizvorrichtung nach Anspruch 8, **dadurch gekennzeichnet, dass** die wenigstens eine Heizeinrichtung (9) kein gesondertes Gehäuse (14) hat.

10. Heizvorrichtung nach einem der vorstehenden Ansprüche, **dadurch gekennzeichnet, dass** die wenigstens eine Heizeinrichtung (9) mit dem Strangpressprofil (1 a) bzw. mit der Hohlkammer (2) verpresst ist.

11. Heizvorrichtung nach einem der vorstehenden Ansprüche, **dadurch gekennzeichnet, dass** die Heizelemente (11) PTC-Widerstände sind.

12. Heizvorrichtung nach einem der vorstehenden Ansprüche, **dadurch gekennzeichnet dass** in der wenigstens einen Heizeinrichtung (9) mehrere Heizelemente (11) geradlinig hintereinander angeordnet sind.

13. Heizvorrichtung nach einem der vorstehenden Ansprüche, **dadurch gekennzeichnet, dass** die Heizelemente (11) in der wenigstens einen Heizeinrichtung (9) paarweise nebeneinander liegend angeordnet sind.

14. Heizvorrichtung nach einem der vorstehenden Ansprüche, **dadurch gekennzeichnet, dass** alle Heizelemente (11) einer Heizeinrichtung (9) in einem einzigen Wärmeübertrager (1) untergebracht sind.

15. Heizvorrichtung nach einem der vorstehenden Ansprüche, **dadurch gekennzeichnet, dass** alle Heizelemente (11) aller Heizeinrichtungen (9) in einem einzigen Wärmeübertrager (1) untergebracht sind.

16. Heizvorrichtung nach einem der vorstehenden Ansprüche, **dadurch gekennzeichnet, dass** das Strangpressprofil (1a) neben den Hohlkammern (2) für die Heizeinrichtung (9) weitere Kammern (3) hat, welche parallel zu den Hohlkammern (2) verlaufen.

17. Heizvörrichtung nach einem der vorstehenden Ansprüche, **dadurch gekennzeichnet, dass** die Hohlkammern (2) für die Heizeinrichtung (9) mittelbar oder unmittelbar durch Stege (22) verbunden sind, welche keine weiteren Kammern enthalten.

18. Heizvorrichtung nach Anspruch 16 oder 17, **dadurch gekennzeichnet, dass** die Hohlkammern (3) für die Heizeinrichtung (9) ausschließlich durch Stege (22) verbunden sind, welche keine weiteren Kammern (3) enthalten.

19. Heizvorrichtung nach Anspruch 17 oder 18, **dadurch gekennzeichnet, dass** die Stege (22) im Querschnitt plankonkav oder bikonkav sind.

20. Heizvorrichtung nach einem der vorstehenden Ansprüche, **dadurch gekennzeichnet, dass** sich das Strangpressprofil (1a) beidseits über die Hohlkammern (2) für die Heizeinrichtung (9) hinaus erstreckt.

21. Heizvorrichtung nach einem der vorstehenden Ansprüche, **dadurch gekennzeichnet, dass** die größte Wandstärke des Strangpressprofils (1a) dort vorgesehen ist, wo das Strangpressprofil (1a) die wenigstens eine Heizeinrichtung (9) umschließt.

22. Heizvorrichtung nach Anspruch 21, **dadurch gekennzeichnet, dass** sich die Wandstärke der Außenwände (6) des Strangpressprofils (1a) zwischen den Stellen der größten und der kleinsten Dicke stetig ändert.

23. Heizvorrichtung nach einem der vorstehenden Ansprüche, **dadurch gekennzeichnet, dass** das Strangpressprofil (1a) aus einem gut wärmeleitfähigen Metall wie z. B. Aluminium oder eine Aluminiumlegierung besteht.

24. Heizvorrichtung nach Anspruch 17 oder 18, **dadurch gekennzeichnet, dass** sich die Umfangswand (4) der beiden äußeren Hohlkammern (2) auf ihrer den Stegen (22) abgewandten Seite in eine Wand (22a) fortsetzt, welche sich von der Umfangswand (4) der Hohlkammern (2) in eine von den Stegen (22) fortweisende Richtung erstreckt.

25. Heizvorrichtung nach einem der Ansprüche 18, 19 und 24, **dadurch gekennzeichnet, dass** die Stege (22) und/oder die von der Umfangswand (4) der Hohlkammern (2) ausgehenden, nach außen ragenden Wände (22a) mit Rippen (23) versehen und/oder aufgerauht sind.

26. Heizvorrichtung nach Anspruch 25, **dadurch gekennzeichnet, dass** die Rippen (23) in der Strangpressrichtung (17) verlaufen.

## Claims

1. Heating apparatus comprising
at least one heater (9) in which one or more electric heating elements (11) are arranged,
at least one heat transmitter (1), which is connected with the at least one heater (9) and has heat transmitter surfaces and is formed from an extruded profile (1 a, 28, 28a) in which the at least one heater (9) is fitted **characterized in that** at least part of the walls (6, 22, 22a) of the extruded profile (1 a), which are not in contact with a heating element (11), is provided with openings through which a gaseous or liquid medium can flow through the extruded profile (1a, 28, 28a) in transverse direction to the direction of extrusion (17),
wherein the at least one heater (9) is arranged in a hollow chamber (2) of the heat transmitter (1).

2. The heating apparatus as defined in Claim 1, **characterized in that** part of the openings in the walls (6, 22, 22a) of the extruded profile (1 a, 28, 28a) are cutouts or holes (18).

3. The heating apparatus as defined in Claim 1 or 2, **characterized in that** at least part of the openings in the walls (6, 22, 22a) of the extruded profile (1 a, 28, 28a) is formed by slits.

4. The heating apparatus as defined in Claim 3, **characterized in that** portions of the walls (6, 22, 22a) of the extruded profile (1 a) that are delimited by slits are bent off from the respective wall (6, 22, 22a).

5. The heating apparatus as defined in Claim 4, **characterized in that** the portions of the walls (6, 22, 22a) of the extruded profile (1a) that are delimited by the slits are bent into the interior of the profile

6. The heating apparatus as defined in any of the preceding claims, **characterized in that** all walls (6, 22, 22a) of the extruded profile (1a, 28, 28a) that are not in contact with a heating element (11) are provided with such openings.

7. The heating apparatus as defined in any of the preceding claims, **characterized in that** the hollow chamber (2) has a closed design viewed in the section through the extruded profile (1a, 28, 28a) transverse to the direction of extrusion (17).

8. The heating apparatus as defined in any of the preceding claims, **characterized in that** the heat transmitter (1) forms a housing for the at least one heater (9).

9. The heating apparatus as defined in Claim 8, **characterized in that** the at least one heater (9) does not have a separate housing (14).

10. The heating apparatus as defined in any of the preceding claims, **characterized in that** the at least one heater (9) is compressed with the extruded profile (1 a) or the hollow chamber (2).

11. The heating apparatus as defined in any of the preceding claims, **characterized in that** the heating elements (11) are PTC resistors.

12. The heating apparatus as defined in any of the preceding claims, **characterized in that** a plurality of heating elements (11) are arranged along a straight line in the at least one heater (9).

13. The heating apparatus as defined in any of the preceding claims, **characterized in that** the heating elements (11) in the at least one heater (9) are arranged in pairs one beside the other.

14. The heating apparatus as defined in any of the preceding claims, **characterized in that** all heating elements (11) of one heater (9) are accommodated in a single heat transmitter (1).

15. The heating apparatus as defined in any of the preceding claims, **characterized in that** all heating elements (11) of all heaters (9) are arranged in a single heat transmitter (1).

16. The heating apparatus as defined in any of the preceding claims, **characterized in that** the extruded profile (1a) comprises further chambers (3) beside the hollow chambers (2) for the heater (9), said further chambers (3) extending in parallel to the hollow chambers (2).

17. The heating apparatus as defined in any of the preceding claims, **characterized in that** the hollow chambers (2) for the heater (9) are directly or indirectly connected by webs (22) that do not contain any further chambers.

18. The heating apparatus as defined in Claim 16 or Claim 17, **characterized in that** the hollow chambers (3) for the heater (9) are connected exclusively by webs (22) that do not contain any further chambers (3).

19. The heating apparatus as defined in Claim 17 or Claim 18, **characterized in that** the webs (22) are plano-concave or biconcave in cross-section.

20. The heating apparatus as defined in any of the preceding claims, **characterized in that** the extruded profile (1a) extends beyond the hollow chambers (2) for the heater (9) on both sides.

21. The heating apparatus as defined in any of the preceding claims, **characterized in that** the extruded profile (1a) has the greatest wall thickness in the area where the extruded profile (1a) encloses the at least one heater (9).

22. The heating apparatus as defined in Claim 21, **characterized in that** the wall thickness of the outer walls (6, 22, 22a) of the extruded profile (1a) varies steadily between the areas of the greatest and the smallest thickness.

23. The heating apparatus as defined in any of the preceding claims, **characterized in that** the extruded profile (1a) consists of a highly heat-conducting metal such as aluminum or an aluminum alloy.

24. The heating apparatus as defined in Claim 17 or Claim 18, **characterized in that** the circumferential wall (4) of the two outer hollow chambers (2) transitions, on the side opposite the webs (22), to a wall (22a) that extends from the circumferential wall (4) of the hollow chambers (2) in a direction away from the webs (22).

25. The heating apparatus as defined in Claims 18, 19 and 24, **characterized in that** the webs (22) and/or the walls (22a) that extend from the circumferential wall (4) of the hollow chambers (2) and that project to the outside are provided with ribs (23) and/or are roughened.

26. The heating apparatus as defined in Claim 26, **characterized in that** the ribs (23) extend in the direction of extrusion (17).

## Revendications

1. Dispositif de chauffage
avec au moins une installation de chauffage (9) dans laquelle un ou plusieurs éléments de chauffage électriques (11) sont disposés,
et avec au moins un échangeur de chaleur (1), lequel est relié avec l'au moins une installation de chauffage (9), qui a des surfaces d'échange de chaleur et est formé dans un profilé d'extrusion (1a, 28, 28a) dans lequel l'au moins une installation de chauffage (9) est incorporée,
**caractérisé en ce qu**'au moins une partie des parois (6, 22, 22a) du profilé d'extrusion (1a), lesquelles ne se situent pas sur un élément de chauffage (1) présentent des ouvertures, grâce auxquelles le profilé d'extrusion (1a, 28, 28a) peut être parcouru par un milieu sous forme gazeuse ou sous forme liquide perpendiculairement par rapport à la direction d'extrusion (17),
où l'au moins une installation de chauffage (9) est incorporée dans une chambre creuse (2) de l'échangeur de chaleur (1).

2. Dispositif de chauffage selon la revendication 1, **caractérisé en ce qu**'au moins une partie des ouvertures dans les parois (6, 22, 22a) du profilé d'extrusion (1a, 28, 28a) sont des découpes ou des trous (18).

3. Dispositif de chauffage selon les revendications 1 ou 2, **caractérisé en ce qu**'au moins une partie des ouvertures dans les parois (6, 22, 22a) du profilé d'extrusion (1a, 28, 28a) est formée par des incisions.

4. Dispositif de chauffage selon la revendication 3, **caractérisé en ce que** les parties de parois (6, 22, 22a) du profilé d'extrusion (1a) délimitées par les incisions sont courbées en partant de la paroi correspondante (6, 22, 22a).

5. Dispositif de chauffage selon la revendication 4, **caractérisé en ce que** les parties des parois (6, 22, 22a) du profilé d'extrusion (1a) délimitées par les incisions sont recourbées vers l'intérieur de celui-ci.

6. Dispositif de chauffage selon l'une des revendications précédentes, **caractérisé en ce que** toutes les parois (22, 22a) du profilé d'extrusion (1a, 28, 28a), lesquelles ne se situent pas sur un élément de chauffage (11), présentent de telles ouvertures.

7. Dispositif de chauffage selon l'une des revendications précédentes, **caractérisé en ce que** les chambres creuses (2) dans le profilé d'extrusion (1a, 28, 28a) dans la coupe située perpendiculaires par rapport à la direction d'extrusion (17) sont formées fermées par le profilé d'extrusion (1a, 28, 28a).

8. Dispositif de chauffage selon l'une des revendications précédentes, **caractérisé en ce que** l'échangeur de chaleur (1) est conçu simultanément comme un logement de l'au moins une installation de chauffage (9).

9. Dispositif de chauffage selon la revendication 8, **caractérisé en ce que** l'au moins une installation de chauffage (9) n'a pas de logement (14) séparé.

10. Dispositif de chauffage selon l'une des revendications précédentes, **caractérisé en ce que** l'au moins une installation de chauffage (9) est co-extrudée avec le profilé d'extrusion (1a), respectivement avec la chambre creuse (2).

11. Dispositif de chauffage selon l'une des revendications précédentes, **caractérisé en ce que** les éléments de chauffage (11) sont des résistances à coefficient de température positif CTP.

12. Dispositif de chauffage selon l'une des revendications précédentes, **caractérisé en ce que** plusieurs éléments de chauffage (11) sont disposés sur une ligne droite les uns derrière les autres dans l'au moins une installation de chauffage (9).

13. Dispositif de chauffage selon l'une des revendications précédentes, **caractérisé en ce que** les éléments de chauffage (11) sont disposés couchés par paires les unes à côté des autres dans l'au moins une installation de chauffage (9).

14. Dispositif de chauffage selon l'une des revendications précédentes, **caractérisé en ce que** tous les éléments de chauffage (11) d'une installation de chauffage (9) sont logés dans un seul échangeur de chaleur (1).

15. Dispositif de chauffage selon l'une des revendications précédentes, **caractérisé en ce que** tous les éléments de chauffage (11) de toutes les installations de chauffage (9) sont logés dans un seul échangeur de chaleur (1).

16. Dispositif de chauffage selon l'une des revendications précédentes, **caractérisé en ce que** le profilé d'extrusion (1a) a d'autres chambres (3) à côté des chambres creuses (2) pour l'installation de chauffage (9) lesquelles s'étendent parallèlement aux chambres creuses (2).

17. Dispositif de chauffage selon l'une des revendications précédentes, **caractérisé en ce que** les chambres creuses (2) pour l'installation de chauffage (9) sont reliées directement ou indirectement par des voies de passage (22), lesquelles ne contiennent pas d'autres chambres.

18. Dispositif de chauffage selon les revendications 16 ou 17, **caractérisé en ce que** les chambres creuses (3) pour l'installation de chauffage (9) sont reliées exclusivement par des voies de passage (22) lesquelles ne contiennent pas d'autres chambres (3).

19. Dispositif de chauffage selon les revendications 17 ou 18, **caractérisé en ce que** les voies de passage (22) sont planes concaves ou biconcaves dans la section transversale.

20. Dispositif de chauffage selon l'une des revendications précédentes, **caractérisé en ce que** le profilé d'extrusion (1a) s'étend vers l'extérieur des deux côtés par-dessus les chambres creuses (2) pour l'installation de chauffage (9).

21. Dispositif de chauffage selon l'une des revendications précédentes, **caractérisé en ce que** l'épaisseur de paroi la plus grande du profilé d'extrusion (1a) est prévue à l'endroit où le profilé d'extrusion (1a) entoure l'au moins une installation de chauffage (9).

22. Dispositif de chauffage selon la revendication 21, **caractérisé en ce que** l'épaisseur de paroi des parois extérieures (6) du profilé d'extrusion (1a) varie de manière constante entre les lieux des épaisseurs maximale et minimale.

23. Dispositif de chauffage selon l'une des revendications précédentes, **caractérisé en ce que** le profilé d'extrusion (1a) est constitué d'un métal bon conducteur de la chaleur, comme, par exemple, l'aluminium ou un alliage d'aluminium.

24. Dispositif de chauffage selon les revendications 17 ou 18, **caractérisé en ce que** la paroi périphérique (4) des deux chambres creuses (2) situées le plus à l'extérieur se poursuit sur le côté opposé aux voies de passage (22) par une paroi (22a), laquelle s'étend de la paroi périphérique (4) des chambres creuses (2) dans une direction allant en s'éloignant des voies de passage (22).

25. Dispositif de chauffage selon l'une des revendications 18, 19, et 24, **caractérisé en ce que** les voies de passage (22) et/ou les parois (22a) sortant de la paroi périphérique (4) des chambres creuses (2), faisant saillie vers l'extérieur, sont munies de nervures (23) et/ou rendues rugueuses.

26. Dispositif de chauffage selon la revendication 25, **caractérisé en ce que** les nervures (23) s'étendent dans la direction d'extrusion (17).
